# EUROPÄISCHE PATENTSCHRIFT

(11) **EP 2 895 363 B1**
(45) Veröffentlichungstag und Bekanntmachung des Hinweises auf die Patenterteilung: **18.12.2019**
(21) Anmeldenummer: 13762427.6
(22) Anmeldetag: 09.09.2013
(51) Int. Cl.: B60T 11/34, B60T 8/18

(54) **REGELBARES LASTBREMSVENTIL MIT INTEGRIERTER KNICKVENTILFUNKTION**
ADJUSTABLE LOAD SENSING VALVE WITH INTEGRATED KINK VALVE FUNCTION
SOUPAPE DE COMMANDE DE FREIN À RÉGULATION EN FONCTION DE LA CHARGE AVEC FONCTION SOUPAPE-PLIANT INTEGREE

(30) Priorität: 12.09.2012 DE 102012108540
(43) Veröffentlichungstag der Anmeldung: 22.07.2015
(73) Patentinhaber: KNORR-BREMSE Systeme für Schienenfahrzeuge GmbH, 80809 München (DE)
(72) Erfinder: KLOSE, Bernd, 12683 Berlin (DE)
(86) Internationale Anmeldenummer: PCT/EP2013/068555
(87) Internationale Veröffentlichungsnummer: WO 2014/040934

(56) Entgegenhaltungen:
- EP-A2- 2 261 095
- EP-B1- 0 734 926
- DE-A1- 3 044 309
- DE-A1-102010 016 438
- DE-B3-102009 013 004

## Beschreibung

### GEBIET DER ERFINDUNG

Die Erfindung betrifft ein regelbares Lastbremsventil mit Knickventilfunktion für Druckluftbremsen von Schienenfahrzeugen, mit einem Gehäuse, das mindestens einen Lufteintritt und mindestens einen Luftaustritt aufweist, wobei ein Belüftungsventilsitz und ein Entlüftungsventilsitz zum Be- und Entlüften eines Bremszylinders nach Maßgabe eines Vorsteuerdruckes an einem innerhalb des Gehäuses befindlichen Stößels angeordnet sind. Ferner betrifft die Erfindung eine pneumatische Bremsausrüstung mit einem solchen regelbaren Lastbremsventil.

Das Einsatzgebiet der vorliegenden Erfindung bezieht sich auf den Schienenfahrzeugbau. Im Rahmen der bei in Schienenfahrzeugen gewöhnlich zum Einsatz kommenden pneumatischen Bremsanlagen werden pneumatisch vorgesteuerte Steuerventile als Stellglieder eingesetzt. Die Stellglieder steuern je die Füllung der Hilfsluftbehälter oder Vorratsluftbehälter und regeln einen Bremszylinder- oder Vorsteuerdruck aus. Letzterenfalls wird ausgehend vom Vorsteuerdruck durch ein zusätzliches Lastbremsventil der Bremszylinderdruck generiert. Die vorliegende Erfindung ist den regelbaren Lastbremsventilen mit Knickventilfunktion zugeordnet.

### HINTERGRUND DER ERFINDUNG

Aus dem allgemein bekannten Stand der Technik geht hervor, dass S-fähige (Geschwindigkeiten bis 100 km/h) und SS-fähige (Geschwindigkeiten bis 120 km/h) Güterwagen in gemischten Zügen fahren. Auf Grund der höheren Abbremsung übernehmen die SS-fähigen Wagen bei mittlerer bis hoher Beladung einen Teil der Bremsleistung der S-fähigen Wagen. Dadurch kommt es insbesondere auf langen Gefällestrecken zur starken Abnutzung und thermischer Überlastung der Bremsbeläge der SS-fähigen Wagen.

Zur Kompensierung des Problems werden in die Bremsausrüstung der SS-fähigen Wagen zusätzliche Knickventile mit folgender Funktion eingefügt:
Ab einer Achslast von 14,5t wird bei kleinen und mittleren Bremsstufen die Bremsleistung auf das Niveau der S-fähigen Wagen begrenzt. Bei hohen Bremsstufen entspricht die Bremsleistung dem Niveau des SS-fähigen Wagen. Diese Funktion ist in UIC-541-04 detailliert definiert.

Zur Realisierung der Knickventilfunktion werden dem Lastbremsventil für automatische Lastabbremsung Knickventile nachgeschaltet. Des Weiteren ist bekannt, dass das Knickventil als zusätzliches Gerät zwischen Steuer- und Lastbremsventil oder zwischen Träger und Lastbremsventil angeflanscht werden kann, wobei auch Knickventile zum Einbau in Rohrleitungen existieren.

Aus der EP 0 734 926 B1 geht eine Ventileinrichtung mit Knickventilfunktion für Lastbremsventile von Druckluftbremsen von Schienenfahrzeugen hervor. Diese Ventileinrichtung weist ein Ein- und Auslassventil für den Ein- beziehungsweise Auslass von Druckluft zur Bildung eines Ausgangsdrucks auf, der sich von einem Eingangsdruck durch seine geknickte Charakteristik unterscheidet. Das Ein- und Auslassventil öffnen wechselweise und in entgegengesetzter Richtung oder sind in einer Abschlussstellung beide geschlossen. Ferner sind das Ein- und das Auslassventil durch einen Druckteilungskolben und einen Nachbremskolben betätigbar, wobei der Druckteilungskolben in Öffnungsrichtung des Einlassventils vom Eingangsdruck, auf einer gegenüberliegenden größeren Fläche vom Ausgangsdruck belastet ist. Der Nachbremskolben stützt sich in Öffnungsrichtung des Einlassventils auf den Druckteilungskolben auf und ist in dieser Richtung vom Eingangsdruck, auf einer gegenüberliegenden Kolbenfläche, von einer vorgegebenen, begrenzten Druck- oder Federkraft belastet.

Die Aufgabe der zuvor genannten Erfindung ist es, eine Ventileinrichtung als Zusatz für Lastbremsventile von Schienenfahrzeugen zu schaffen, welche die Bremsdruckcharakteristik von Fahrzeugen mit hoher Abbremsung in dem Bereich, der langanhaltenden Bremsungen entspricht, an die der Fahrzeuge mit der üblichen Charakteristik angleicht. Dies wird erreicht durch die Schaffung eines Knickventils, welches einen als Eingangsdruck dienenden Bremsdruck, in einen Ausgangsdruck umwandelt.

Des Weiteren geht aus der DE 10 2009 013 004 B3 eine weitere Ventileinrichtung mit Knickventilfunktion für Lastbremsventile von Druckluftbremsen von Schienenfahrzeugen hervor. Diese Ventileinrichtung weist eine Umstelleinrichtung zur Umstellung der Knickventilfunktion aus einem eingeschalteten Zustand in einen ausgeschalteten Zustand und umgekehrt auf. Somit ist es möglich, einen Wagen mit einer Ventileinrichtung mit herkömmlicher Knickventilfunktion für den SS-Verkehr sowohl in diesen SS-Verkehr als auch im S-Verkehr einzustellen. Ferner muss das Knickventil nicht ausgetauscht werden, sondern kann eingebaut bleiben DE 10 2010 016 438 A1 und EP2 261 095 A2 beschreibt Knickventile wobei der Steuerdruck der Hauptbremsleitungssteuerdruck ist.

### OFFENBARUNG DER ERFINDUNG

Es ist daher die Aufgabe der vorliegenden Erfindung ein regelbares Lastbremsventil mit integrierter Knickventilfunktion bereitzustellen, wobei die Knickventilfunktion direkt im Lastbremsventil integriert ist, so dass ein separates Knickventil entfällt und somit sowohl Material, als auch Gewicht und Bauraum eingespart werden.

Die Aufgabe wird ausgehend von einem regelbaren Lastbremsventil gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß ist an dem Stößel ein zumindest mittelbar durch den Vorsteuerdruck beaufschlagter Hilfskolbensatz zur Generierung einer Knickventilfunktion integriert. Dieser Hilfskolbensatz ermöglicht die Anpassung der Kennlinien wie durch ein separates Knickventil, mit dem Vorteil, dass das separate Knickventil somit entfallen kann. Knickventile für Schienenfahrzeuge sind meist relativ großbauend und schwer, so dass eine Integration des Knickventils im regelbaren Lastbremsventil und der daraus resultierende Entfall eines separaten Knickventils sehr vorteilhaft ist. Zudem entfällt eine separate Einspeisung von Drücken in das Knickventil, wodurch eine geringere Anzahl an Druckleitungen benötigt wird.

Des Weiteren bevorzugt ist, dass der Hilfskolbensatz eine an einem distalen Ende des Stößels angeordnete Büchse aufweist, in der ein innerhalb der Büchse axial relativ zum Stößel beweglicher erster Drucktellerring und ein mit dem Stößel wirkverbundener erster Druckteller angeordnet sind, wobei zwischen einer Stirnfläche des ersten Drucktellerrings und einer Stirnfläche der Büchse axial zum Stößel ein Federelement zum Andrücken des ersten Drucktellerrings an die Büchse angeordnet ist. Es ist ebenfalls denkbar, dass sich das Federelement direkt am Stößel abstützt, entscheidend ist die zumindest mittelbare Krafteinwirkung des Federelements auf den Stößel.

Der Hilfskolbensatz ermöglicht insbesondere die Knickventilfunktion, wobei die konstruktive Ausgestaltung bauraum- und gewichtseinsparend ist. Das Federelement ist vorgespannt und wirkt derart auf den ersten Drucktellerring, dass dieser in seiner Nullposition gegen einen radial ausgebildeten Anschlag an der Büchse gedrückt wird. Die Büchse ist am Stößel gelagert und liegt zumindest mittelbar an dem ersten Druckteller an.

Es wird weiterhin vorgeschlagen, dass der Stößel einen Kanal zur Durchleitung des Vorsteuerdruckes in eine unterhalb des ersten Drucktellerrings und des ersten Drucktellers ausgebildete Kammer aufweist. Vorteilhafter weise erstreckt sich dieser Kanal im Wesentlichen axial entlang des Stößels durch den ersten Druckteller hindurch, bis zum distalen Ende des Stößels, so dass der Kanal in eine von der Büchse, dem ersten Drucktellerring und dem ersten Druckteller gebildete Kammer mündet. Diese Kammer ist luftdicht, wobei der sich in der Kammer aufbauende Vorsteuerdruck auf die Stirnfläche des ersten Drucktellerrings und auf die Stirnfläche des ersten Drucktellers wirkt, um diese axial zu bewegen. Ferner kann der sich in der Kammer aufbauende Vorsteuerdruck auch ein Andrücken der Büchse an das distale Ende des Stößels verhindern.

Gemäß einer die Erfindung weiter verbessernden Maßnahme wird vorgeschlagen, dass der Stößel an einem mittleren Abschnitt, axial oberhalb der Büchse einen mit dem Stößel fest verbundenen zweiten Druckteller aufweist, der auf einer Stirnfläche von einem Bremszylinderdruck beaufschlagbar ist. Die somit gebildete Kammer zwischen Gehäuse und dem zweiten Druckteller ist mit dem Bremszylinderdruck gefüllt, wobei dieser durch eine axiale Bewegung des Stößels erhöht oder verringert werden kann.

Die Erfindung schließt die technische Lehre ein, dass der Stößel zwischen dem ersten und dem zweiten mit dem Stößel wirkverbundenen Drucktellern einen zweiten axial relativ zum Stößel beweglichen und an einem Außenumfang des Stößels angeordneten Drucktellerring aufweist, der auf einer Stirnfläche durch den Vorsteuerdruck beaufschlagbar ist und auf der entgegengesetzten Stirnfläche das Federelement abstützt. Somit wirkt das vorgespannte Federelement zwischen dem Stößel und dem zweiten Drucktellerring. Bei einer Beaufschlagung der Kammer zwischen Drucktellerring und Gehäuse mit einem Vorsteuerdruck, der den entgegengesetzt wirkenden Federdruck übersteigt, bewegt sich der Drucktellerring axial entlang des Stößels, so dass das Federelement gestaucht wird.

Vorzugsweise ist die Büchse an einem vom Stößel wegzeigenden Ende auf einem Ende eines darunterliegenden Waagebalkens gelagert. Des Weiteren bevorzugt ist, dass ein an einem distalen Ende einen von einem Vorsteuerdruck beaufschlagten Druckteller aufweisender zweiter Stößel, an einem entgegengesetzten distalen Ende auf einem anderen Ende des Waagebalkens gelagert ist. Die beiden Stößel sind somit über den Waagebalken mechanisch miteinander verbunden, so dass eine Krafteinwirkung des zweiten Stößels auf den Waagebalken eine entgegengesetzte Krafteinwirkung auf den Stößel hat. Eine Krafteinwirkung auf den zweiten Stößel ist über eine Vorsteuerdruckbeaufschlagung des Drucktellers möglich. Die Lagerung am Waagebalken ist entscheidend, wobei durch eine gelenkige Verbindung zwischen den Stößeln und des Waagebalkens eine Winkelbewegung der Stößel realisierbar ist. Die gelenkige Verbindung kann punktförmig, vorzugsweise über eine Kugel oder linienförmig, vorzugsweise über eine Schneide aber auch flächig, vorzugsweise über einen Gelenkbolzen erfolgen.

Darüber hinaus ist der Waagebalken vorzugsweise auf einem axial entlang des Waagebalkens bewegbaren Drehpunkt gelagert, wobei die Position des Drehpunktes am Waagebalken und somit die Übersetzung zwischen den Stößeln über einen von einem beladungsabhängigen Steuerdruck beaufschlagten Kolben einstellbar ist. Eine Verschiebung des Drehpunktes führt zu einer Verlängerung bzw. Verkürzung der jeweiligen Hebelarme, wodurch die vom zweiten Stößel auf den Stößel zu übertragende Kraft nicht nur über den Vorsteuerdruck, sondern auch über die Übersetzung zwischen den beiden Stößeln anpassbar ist. Über den Steuerdruck wird der Kolben axial verschoben, wobei die Verschiebung des Kolbens direkt zum Drehpunkt weitergeleitet wird.

Gemäß einer die Erfindung weiter verbessernden Maßnahme wird vorgeschlagen, dass an einer vom Steuerdruck beaufschlagten Stirnfläche des Kolbens entgegengesetzten Stirnfläche des Kolbens ein Federelement zur Anlage kommt, um den Kolben in einer Nullposition zu halten. Das Federelement ist vorzugsweise vorgespannt und bewirkt bei einer Verringerung des Steuerdruckes die Rückführung des Kolbens. Ferner ist es vorteilhaft wenn das Federelement speziell auf das Wiegeventil abgestimmt ist, um bei einer bestimmten Lastabwiegung eine definierte Stauchung zu erfahren. Die Bewegung des Kolbens ist von den auf den Kolben wirkenden Kräften abhängig, wobei erst nach einer Überwindung der Federkraft der Kolben bewegbar ist.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig.1: ein vereinfachtes Blockdiagramm einer pneumatischen Bremsausrüstung für ein Schienenfahrzeug gemäß einer bevorzugten Ausführungsform,
- Fig.2: eine schematische Längsschnittdarstellung durch das regelbare Lastbremsventil aus Fig. 1, und
- Fig.3: eine graphische Darstellung von Kennlinien für unterschiedliche Gewichtslastzustände, wobei der Bremszylinderdruck in Abhängigkeit vom Vorsteuerdruck aufgetragen ist.

### DETAILLIERTE BESCHREIBUNG EINER BEVORZUGTEN AUSFÜHRUNGSFORM

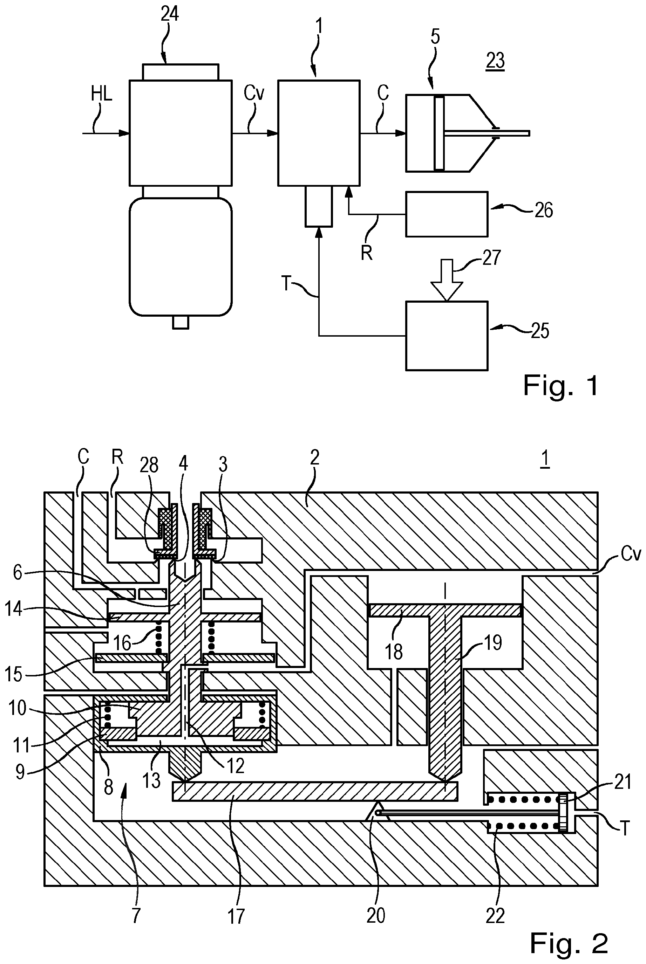

Figur 1 zeigt eine vereinfachte Darstellung einer pneumatischen Bremsausrüstung 23 für Schienenfahrzeuge mit den im Rahmen der Erfindung wichtigen Bestandteilen. Ein Steuerventil 24 wird von einer Hauptluftleitung HL gespeist, welche eine durch den gesamten Zug durchgehende Druckluftleitung ist, die unter anderem als Verbindungsleitung der Bremseinrichtungen des Zuges dient, um einen Vorsteuerdruck Cv für das regelbare Lastbremsventil 1 zu generieren. Ferner steuert das Steuerventil 24 die Füllung des Vorratsluftbehälters 26 in Abhängigkeit des Druckes in der Hauptluftleitung HL. Der Vorratsluftbehälter 26 ist ebenfalls mit dem regelbaren Lastbremsventil 1 fluidtechnisch verbunden und stellt einen Speisedruck R zur Verfügung, der zur Befüllung des Bremszylinders 5 dient. Darüber hinaus weist die Bremsausrüstung 23 ein Wiegeventil 25 zur Ermittlung des Beladungszustandes durch Abgreifen und Auswerten einer aktuellen Gewichtskraft 27 eines Wagens auf. Das Wiegeventil 25 generiert einen Steuerdruck T, der in das regelbare Lastbremsventil 1 gespeist wird und dieses beladungsabhängig steuert. Somit weist das regelbare Lastbremsventil 1 drei Lufteintritte und einen Luftaustritt auf, wobei der Luftaustritt einen Bremszylinderdruck C für den Bremszylinder 5 bereitstellt.

Figur 2 ist eine schematische Längsschnittdarstellung durch das regelbare Lastbremsventil 1 aus Figur 1. Ein Gehäuse 2 weist vier Luftanschlüsse auf und umfasst einen ersten Stößel 6 und einen zweiten Stößel 19. An einem distalen Ende des Stößels 6 ist ein Einlassventil 28 angeordnet, das auf einem Belüftungsventilsitz 3 am Gehäuse 2 und einem Entlüftungsventilsitz 4 an dem Stößel 6 zur Anlage kommt. Bei einem Öffnen des Einlassventils 28 gelangt Speisedruck R aus dem Vorratsbehälter 26 in eine Kammer, welche durch einen mit dem Stößel 6 wirkverbundenen zweiten Druckteller 14 und dem Gehäuse gebildet wird. Diese Kammer dient der Generierung eines Bremszylinderdruckes C, wobei solange der Speisedruck R in die mit Bremszylinderdruck C beaufschlagte Kammer strömt, bis die Kraft des zweiten Drucktellers 14 ausreicht, um das Einlassventil 28 wieder zu schließen. Auf einer entgegengesetzten Stirnfläche des zweiten Drucktellers 14 stützt sich ein Federelement 16 auf, das auf einen an einer Außenumfangsfläche des Stößels 6 angeordneten zweiten Drucktellerring 15 wirkt. Unterhalb des zweiten Drucktellerrings 15 wird durch den zweiten Drucktellerring 15 und dem Gehäuse 2 eine Kammer gebildet, die mit dem Steuerdruck Cv beaufschlagbar ist.

Der Steuerdruck Cv wird durch einen Kanal 12 im Stößel 6 in eine Kammer 13 geführt, die innerhalb eines Hilfskolbensatzes 7 angeordnet ist. Dieser weist eine an einem distalen Ende des Stößels 6 angeordnete Büchse 8 auf, in der ein innerhalb der Büchse 8 axial relativ zum Stößel 6 beweglicher erster Drucktellerring 9 und ein mit dem Stößel 6 wirkverbundener erster Druckteller 10 angeordnet sind. Zwischen einer Stirnfläche des ersten Drucktellerrings 9 und einer Stirnfläche der Büchse 8 ist axial zum Stößel 6 ein Federelement 11 zum Andrücken des ersten Drucktellerrings 9 an die Büchse 8 angeordnet. Die Beaufschlagung der Kammer 13 mit Vorsteuerdruck Cv nimmt Einfluss auf die Position des ersten Drucktellers 10 und des ersten Drucktellerrings 9, so dass eine axiale Verschiebung dieser Teile möglich ist. Ferner wirkt der Steuerdruck Cv auch auf einen Druckteller 18 eines zweiten Stößels 19, so dass der zweite Stößel 19 durch die Druckeinwirkung axial bewegbar ist.

Die beiden Stößel 6 und 19 stützen sich jeweils auf einem Ende eines Waagebalkens 17 ab, wobei der Abstand zwischen den beiden Stößel 6 und 19 maximal ist. Unterhalb des Waagebalkens 17 ist ein Drehpunkt 20 angeordnet, der über einen von einem Steuerdruck T beaufschlagten Kolben 21 axial entlang des Waagebalkens 17 verschiebbar ist. Durch eine Verschiebung des Drehpunktes 20 ändert sich die Übersetzung zwischen den beiden Stößeln 6 und 19, so dass die Krafteinwirkung des zweiten Stößels 19 auf den Stößel 6 beinflussbar ist. Ein Federelement 22 ist derart am Kolben 21 angeordnet, dass es dem Steuerdruck T entgegenwirkt und den Kolben 21 in eine Nullposition drückt.

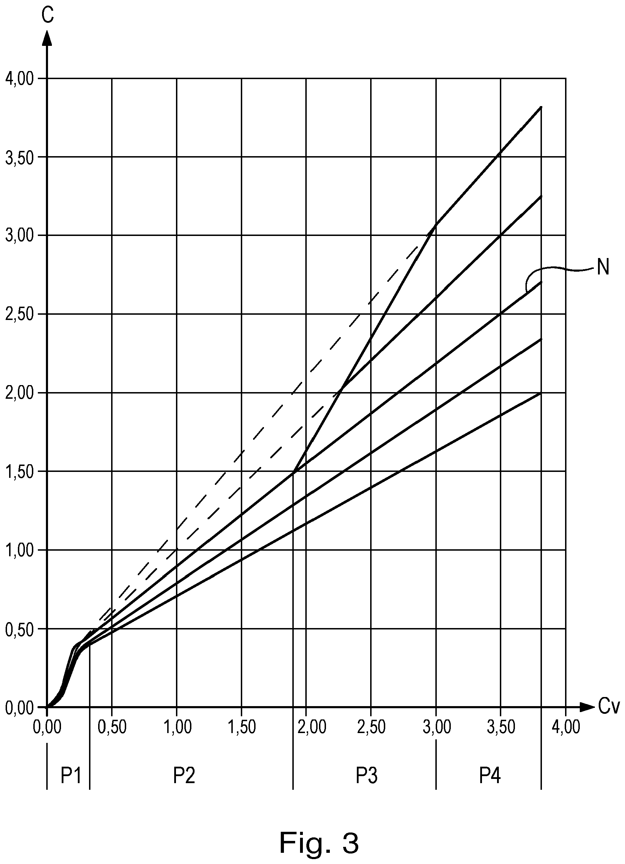

Figur 3 zeigt die nach UIC541-04 und EN15611 geforderten und durch das erfindungsgemäße regelbare Lastbremsventil 1 erzeugten Kennlinien, wobei Kennlinie N die 14,5t-Kennlinie darstellt. Die Kennlinien unterhalb der 14,5t-Kennlinie N weisen geringere Lastzustände auf als 14,5t und werden von der Knickventilfunktion nicht beeinflusst. Oberhalb der 14,5t-Kennlinie N erfolgt in kleineren Bremsstufen eine Absenkung dieser Kurve auf das 14,5t-Niveau. Die oberhalb der 14,5t-Kennlinie N befindlichen Kennlinien stellen höhere Lastzustände als 14,5t dar. Die gestrichelten Bereiche der Kennlinien stellen den Verlauf der Kennlinien ohne Knickventilfunktion dar.

In einem Grundzustand, welcher den Anfangspunkt von Phase 1 bzw. den Nullpunkt darstellt, liegt der Speisedruck R an, wobei der Steuerdruck T beladungsabhängig anliegt. In diesem Zustand ist der Stößel 6 gelöst, sodass kein Vorsteuerdruck Cv und kein Bremszylinderdruck C anliegt.

Sobald Phase 1 eingeleitet wird erfolgt ein Ansprung in der Kurve. Das Einlassventil 28 wird durch den vorsteuerdruckbeaufschlagten zweiten Drucktellerring 15 über das vorgespannte Federelement 16 geöffnet und füllt den Bremszylinder 5 unabhängig vom Beladungszustand. Gleichzeitig wird durch den mit vorsteuerdruckbeaufschlagten Druckteller 18 beladungsabhängig über den Waagebalken 17 eine zusätzliche, wesentlich geringere Kraftkomponente in Öffnungsrichtung des Einlassventils 28 über den Stößel 6 eingeleitet. Hierdurch wird mit steigendem Vorsteuerdruck Cv ein schneller Anstieg des Bremszylinderdruckes C bewirkt. Dieser Prozess hält solange an, bis die Kraft des Drucktellerrings 15 die Vorspannkraft des Federelements 16 übersteigt. Der Drucktellerring 15 kann dann seine Kraft auf den Stößel 6 nicht weiter steigern und geht auf Anschlag.

Phase 2 wird eingeleitet. Mit weiter steigendem Vorsteuerdruck Cv erhöht sich beladungsabhängig über den Waagebalken 17 die Kraft auf die Büchse 8. Der in der Büchse 8 integrierte erste Druckteller 10 ist derart dimensioniert, dass bei Beladungen kleiner/gleich 14,5t, der Vorsteuerdruck Cv ausreicht, um den ersten Druckteller 10 gegen die Oberseite der Büchse 8 zu drücken. In diesem Fall sind Stößel 6 und Büchse 8 starr gekoppelt. Der Hilfskolbensatz 7 hat keinen Einfluss auf den eingesteuerten Bremszylinderdruck C. Die Knickventilfunktion ist deaktiviert. Bei Beladungen größer 14,5t kann die über den vorsteuerdruckbeaufschlagten ersten Druckteller 10 vorgespannte Büchse 8 die über den Waagebalken 17 eingeleitete Kraft nicht mehr übertragen. Die Büchse 8 geht an den oberen Anschlag im Gehäuse 2. Der Stößel 6 arbeitet nun vorgesteuert durch den ersten Druckteller 10 als einfacher Druckübersetzer. Das Übersetzungsverhältnis entspricht dem 14,5t-Niveau.

Die Einleitung der Phase 3 beginnt. Bei weiter steigendem Vorsteuerdruck Cv überwindet nun der erste Drucktellerring 9 die Kraft des Federelementes 11. Bei Beladungen kleiner/gleich 14,5t ändert sich in der Wirkung zur Phase 2 nichts. Die zunehmende Kraft des ersten Drucktellerrings 9 drückt den ersten Druckteller 10 zusätzlich gegen die Oberseite der Büchse 8. Stößel 6 und Büchse 8 bleiben starr gekoppelt. Bei Beladungen größer 14,5t addieren sich die Kräfte des ersten Drucktellerrings 9 und des ersten Drucktellers 10. Die über den Waagebalken 17 eingeleitete Kraft ist größer als die Kraft des ersten Drucktellerrings 9 und des ersten Drucktellers 10. Die Büchse 8 bleibt am oberen Anschlag im Gehäuse 2, wobei der erste Stößel 6 weiter als einfacher Druckübersetzer arbeitet, jedoch mit geändertem Übersetzungsverhältnis. Das bewirkt einen steileren Anstieg des Bremszylinderdrucks C.

Phase 4 wird eingeleitet. Die Kraft des ersten Drucktellerrings 9 und des ersten Drucktellers 10 überwindet nun auch bei Beladungen größer 14,5t die über den Waagebalken 17 eingeleitete Kraft. Der erste Druckteller 10 ist jetzt in allen Beladungszuständen an die Oberseite der Büchse 8 gepresst, wobei der Stößel 6 und die Büchse 8 starr gekoppelt sind. Die Knickventilfunktion ist somit deaktiviert.

### Bezugszeichenliste

- 1: regelbares Lastbremsventil
- 2: Gehäuse
- 3: Belüftungsventilsitz
- 4: Entlüftungsventilsitz
- 5: Bremszylinder
- 6: Stößel
- 7: Hilfskolbensatz
- 8: Büchse
- 9: erster Drucktellerring
- 10: erster Druckteller
- 11: Federelement
- 12: Kanal
- 13: Kammer
- 14: zweiter Druckteller
- 15: zweiter Drucktellerring
- 16: Federelement
- 17: Waagebalken
- 18: Druckteller
- 19: Stößel
- 20: Drehpunkt
- 21: Kolben
- 22: Federelement
- 23: Bremsausrüstung
- 24: Steuerventil
- 25: Wiegeventil
- 26: Vorratsluftbehälter
- 27: Gewichtskraft
- 28: Einlassventil

- C: Bremszylinderdruck
- C_{V}: Vorsteuerdruck
- HL: Hauptluftleitung
- R: Speisedruck
- T: Steuerdruck
- P: Phase
- N: 14,5t Kurve

## Patentansprüche

1. Regelbares Lastbremsventil (1) mit Knickventilfunktion für Druckluftbremsen von Schienenfahrzeugen, mit einem Gehäuse (2), das mindestens einen Lufteintritt und mindestens einen Luftaustritt aufweist, wobei ein Belüftungsventilsitz (3) und ein Entlüftungsventilsitz (4) zum Be- und Entlüften eines Bremszylinders (5) nach Maßgabe eines Vorsteuerdruckes (Cv) an einem innerhalb des Gehäuses (2) befindlichen Stößels (6) angeordnet sind,
**dadurch gekennzeichnet, dass** an dem Stößel (6) ein zumindest mittelbar durch den Vorsteuerdruck (Cv) beaufschlagter Hilfskolbensatz (7) zur Generierung einer Knickventilfunktion integriert ist.

2. Regelbares Lastbremsventil (1) nach Anspruch 1,
**dadurch gekennzeichnet, dass** der Hilfskolbensatz (7) eine an einem distalen Ende des Stößels (6) angeordnete Büchse (8) aufweist, in der ein innerhalb der Büchse (8) axial relativ zum Stößel (6) beweglicher erster Drucktellerring (9) und ein mit dem Stößel (6) wirkverbundener erster Druckteller (10) angeordnet sind, wobei zwischen einer Stirnfläche des ersten Drucktellerrings (9) und einer Stirnfläche der Büchse (8) axial zum Stößel (6) ein Federelement (11) zum Andrücken des ersten Drucktellerrings (9) an die Büchse (8) angeordnet ist.

3. Regelbares Lastbremsventil (1) nach Anspruch 2,
**dadurch gekennzeichnet, dass** der Stößel (6) einen Kanal (12) zur Durchleitung des Vorsteuerdruckes (Cv) in eine unterhalb des ersten Drucktellerrings (9) und des ersten Drucktellers (10) ausgebildete Kammer (13) aufweist.

4. Regelbares Lastbremsventil (1) nach Anspruch 1,
**dadurch gekennzeichnet, dass** der Stößel (6) an einem mittleren Abschnitt, axial oberhalb der Büchse (8) einen mit dem Stößel (6) wirkverbundenen zweiten Druckteller (14) aufweist, der auf einer Stirnfläche von einem Bremszylinderdruck (C) beaufschlagbar ist und auf einer entgegengesetzt angeordneten Stirnfläche ein Federelement (15) abstützt.

5. Regelbares Lastbremsventil (1) nach Anspruch 1,
**dadurch gekennzeichnet, dass** der Stößel (6) zwischen dem ersten und dem zweiten mit dem Stößel (6) wirkverbundenen Drucktellern (10, 14) einen zweiten axial relativ zum Stößel (6) beweglichen und an einem Außenumfang des Stößels (6) angeordneten Drucktellerring (15) aufweist, der auf einer Stirnfläche durch den Vorsteuerdruck (Cv) beaufschlagbar ist und auf der entgegengesetzten Stirnfläche das Federelement (16) abstützt.

6. Regelbares Lastbremsventil (1) nach Anspruch 1,
**dadurch gekennzeichnet, dass** die Büchse (8) an einem vom Stößel (6) wegzeigenden Ende auf einem Ende eines darunterliegenden Waagebalkens (17) gelagert ist.

7. Regelbares Lastbremsventil (1) nach Anspruch 6,
**dadurch gekennzeichnet, dass** ein an einem distalen Ende einen von einem Vorsteuerdruck (Cv) beaufschlagten Druckteller (18) aufweisender Stößel (19), an einem entgegengesetzten distalen Ende auf einem anderen Ende des Waagebalkens (17) gelagert ist.

8. Regelbares Lastbremsventil (1) nach Anspruch 6 bis 7,
**dadurch gekennzeichnet, dass** der Waagebalken (17) auf einem axial entlang des Waagebalkens (17) bewegbaren Drehpunkt (20) gelagert ist, wobei die Position des Drehpunktes (20) am Waagebalken (17) und somit die Übersetzung zwischen den Stößeln (6, 19) über einen von einem beladungsabhängigen Steuerdruck (T) beaufschlagten Kolben (21) einstellbar ist.

9. Regelbares Lastbremsventil (1) nach Anspruch 8,
**dadurch gekennzeichnet, dass** an einer vom Steuerdruck (T) beaufschlagten Stirnfläche des Kolbens (21) entgegengesetzten Stirnfläche des Kolbens (21) ein Federelement (22) zur Anlage kommt, um den Kolben (21) in einer Nullposition zu halten.

10. Pneumatische Bremsausrüstung (23) für Schienenfahrzeuge umfassend ein über eine Hauptluftleitung (HL) gespeistes Steuerventil (24) zur Generierung eines Vorsteuerdrucks (Cv) und ein gewichtskraftgespeistes Wiegeventil (25) zur Generierung eines Steuerdrucks (T), wobei der Vorsteuerdruck (Cv) und der Steuerdruck (T) in ein regelbares Lastbremsventil (1) nach einem der vorhergehenden Ansprüche zum Betrieb des regelbaren Lastbremsventils (1) speisbar sind, so dass dieses einen Bremszylinderdruck (C) zum Betreiben eines Bremszylinders (5) erzeugt, wobei der Bremszylinder (5) über einen von einem Vorratsluftbehälter (26) generierten Speisedruck (R) speisbar ist.

## Claims

1. Adjustable load sensing brake valve (1) with a kink valve function for compressed air brakes of rolling stock, with a housing (2) that has at least one air inlet and at least one air outlet, wherein a vent valve seat (3) and an air release valve seat (4) are arranged on a plunger (6) located inside the housing (2) to ventilate and evacuate a brake cylinder (5) depending on a pilot pressure (Cv)
**characterised in that,** on plunger (6), an auxiliary piston set (7) pressurised at least indirectly by the pilot pressure (Cv) is incorporated to generate a kink valve function.

2. Adjustable load sensing brake valve (1) according to claim 1,
**characterised in that** the auxiliary piston set (7) has a sleeve (8) arranged at a distal end of the plunger (6) in which a first pressure plate ring (9) movable axially within the sleeve (8) relative to the plunger (6) and a first pressure plate (10) operatively connected to the plunger (6) are arranged wherein, between a face of the first pressure plate ring (9) and a face of the sleeve (8), a spring element (11) is arranged axially to the plunger (6) to press the first pressure plate ring (9) on to the sleeve (8).

3. Adjustable load sensing brake valve (1) according to claim 2,
**characterised in that** the plunger (6) has a channel (12) for conducting the pilot pressure (Cv) into a chamber (13) formed underneath the first pressure plate ring (9) and the first pressure plate (10).

4. Adjustable load sensing brake valve (1) according to claim 1,
**characterised in that** the plunger (6) has a second pressure plate (14) operatively connected with the plunger (6), at a central section axially above the sleeve (8), can be pressurised on one face by a brake cylinder pressure (C) and supports a spring element (15) on its opposite face.

5. Adjustable load sensing brake valve (1) according to claim 1,
**characterised in that,** between the first and second pressure plates (10, 14) operatively connected to the plunger (6), the plunger (6) has a second pressure plate ring (15), movable axially relative to the plunger (6) and arranged on an outer periphery of the plunger (6), wherein said second pressure plate ring can be pressurised by the pilot pressure (Cv) on one face and supports the spring element (16) on the opposite face.

6. Adjustable load sensing brake valve (1) according to claim 1,
**characterised in that** the sleeve (8) is mounted at the end away from the plunger (6) on one end of the weighing beam (17).

7. Adjustable load sensing brake valve (1) according to claim 6,
**characterised in that** a plunger (19) having, at a distal end, a pressure plate (18) pressurised by a pilot pressure (Cv), is mounted at an opposite distal end on another end of the weighing beam (17).

8. Adjustable load sensing brake valve (1) according to claims 6 to 7,
**characterised in that** the weighing beam (17) is mounted on a pivot point (20) movable axially along the weighing beam (17), wherein the position of the pivot point (20) on the weighing beam (17), and, therefore, the ratio between the plungers (6, 19) is adjustable by a piston (21) pressurised by a control pressure (T) dependent on the loading.

9. Adjustable load sensing brake valve (1) according to claim 8,
**characterised in that** a spring element (22) is in contact with one face of the piston (21) opposite the pressurised face of the piston (21) in order to maintain the piston (21) in a neutral position.

10. Pneumatic brake equipment (23) for rolling stock comprising a control valve (24), supplied by a main air inlet (HL), to generate a pilot pressure (Cv) and a gravity-fed weighing valve (25) to generate a control pressure (T), wherein the pilot pressure (Cv) and the control pressure (T) can be supplied to an adjustable load sensing brake valve (1) according to any one of the preceding claims to operate the adjustable load sensing brake valve (1), so that it produces a brake cylinder pressure (C) to operate a brake cylinder (5) wherein the brake cylinder (5) can be supplied by a supply pressure (R) generated from a supply air reservoir (26).

## Revendications

1. Soupape (1) de frein à la charge réglable, ayant une fonction de soupape de limitation de la pression pour des freins à air comprimé de véhicule ferroviaire, comprenant un corps (2), qui a au moins une entrée d'air et au moins une sortie d'air, un siège (3) de soupape d'alimentation en air et un siège (4) de soupape de purge pour alimenter en air et purger un cylindre (5) de frein, en fonction d'une pression (Cv) pilote, étant montés sur un poussoir (6) se trouvant à l'intérieur du corps (2),
**caractérisée en ce qu'**au poussoir (6), est, pour produire une fonction de soupape de limitation de la pression, intégré un jeu (7) de piston auxiliaire soumis, au moins indirectement, à la pression (Cv) pilote.

2. Soupape (1) de frein à la charge réglable suivant la revendication 1,
**caractérisée en ce que** le jeu (7) de piston auxiliaire a une boîte (8), qui est disposée à une extrémité distale du poussoir (6) et dans laquelle sont disposés un premier anneau (9) de plateau de pression, mobile à l'intérieur de la boîte (8), axialement par rapport au poussoir (6), et un premier plateau (10) de pression en liaison d'action avec le poussoir (6), dans laquelle il est disposé, entre une surface frontale du premier anneau (9) de plateau de pression et une surface frontale de la boîte (8), axialement par rapport au poussoir (6), un élément (11) de ressort pour repousser le premier anneau (9) de plateau de pression sur la boîte (8).

3. Soupape (1) de frein à la charge réglable suivant la revendication 2,
**caractérisée en ce que** le poussoir (6) a un canal (12) pour l'envoi de la pression (Cv) pilote dans une chambre (13), constituée en dessous du premier anneau (9) de plateau de pression et du premier plateau (10) de pression.

4. Soupape (1) de frein à la charge réglable suivant la revendication 1,
**caractérisée en ce que** le poussoir (6) a, sur un tronçon médian, axialement au-dessus de la boîte (8), un deuxième plateau (14) de pression, qui est en liaison d'action avec le poussoir (6), qui peut être soumis sur une surface frontale à une pression (C) de cylindre de frein, et un élément (15) de ressort s'appuie sur une surface frontale opposée.

5. Soupape (1) de frein à la charge réglable suivant la revendication 1,
**caractérisée en ce que** le poussoir (6) a, entre le premier et le deuxième plateaux (10, 14) de pression, en liaison d'action avec le poussoir (6), un deuxième anneau (15) de plateau de pression, mobile axialement par rapport au poussoir (6) et disposé sur un pourtour extérieur du poussoir (6), anneau qui peut être soumis sur une surface frontale à la pression (Cv) pilote et l'élément (16) de ressort s'appuie sur la surface frontale opposée.

6. Soupape (1) de frein à la charge réglable suivant la revendication 1,
**caractérisée en ce que** la boîte (8) est, à une extrémité loin du poussoir (6), montée sur une extrémité d'un fléau (17) sous-jacent.

7. Soupape (1) de frein à la charge réglable suivant la revendication 6,
**caractérisée en ce qu'**un poussoir (19), ayant, à une extrémité distale, un plateau (18) de pression soumis à la pression (Cv) pilote, est monté, à une extrémité distale opposée, sur une autre extrémité du fléau (17).

8. Soupape (1) de frein à la charge réglable suivant la revendication 6 à 7,
caracérisée en ce que le fléau (17) est monté sur un point (20) de rotation, mobile axialement le long du fléau (17), la position du point (20) de rotation sur le fléau (17) et ainsi la démultiplication entre les pistons (6, 19) étant réglable par un piston (21) soumis à une pression (T) de commande, qui dépend de la charge.

9. Soupape (1) de frein à la charge réglable suivant la revendication 8,
**caractérisée en ce que**, sur une surface frontale du piston (21) opposée à la surface frontale du piston soumise à la pression (T) de commande, vient s'appliquer un élément (22) de ressort pour maintenir le piston (21) dans une position zéro.

10. Equipement (23) de frein pneumatique de véhicules ferroviaires, comprenant une soupape (24) pilote, alimentée par un conduit (HL) d'air principal pour produire une pression (Cv) pilote, et un détendeur (25) de pesée, alimenté par la force de pesée pour produire une pression (T) de commande, la pression (Cv) pilote et la pression (T) de commande pouvant être envoyées dans une soupape de frein à la charge réglable suivant l'une des revendications précédents pour faire fonctionner la soupape (1) de frein à la charge réglable, de manière à ce que celle-ci produise une pression (C) de cylindre de frein pour faire fonctionner un cylindre (5) de frein, le cylindre (5) de frein pouvant être soumis à une pression (R) d'alimentation produite par un réservoir (26) d'air de réserve.
